# EUROPÄISCHE PATENTANMELDUNG

(11) **EP 1 357 762 A1**
(43) Veröffentlichungstag der Anmeldung: **29.10.2003**
(21) Anmeldenummer: 02009547.7
(22) Anmeldetag: 26.04.2002
(51) Int. Cl.: H04Q 3/00, H04Q 11/04

(54) **Kommunikationssystem mit automatischer Benachrichtigung eines Teilnehmers bei einer Funktionsbeeinträchtigung eines Teilnehmeranschlusses**

(71) Anmelder: SIEMENS AKTIENGESELLSCHAFT, 80333 München (DE)
(72) Erfinder: Zwach, Michael, 2340 Mödling (AT)
(74) Vertreter: Berg, Peter, Dipl.-Ing.

(57) **Zusammenfassung**

Verfahren zum Betreiben eines Kommunikationssystems (TS), bei dem ein Telekommunikationsnetz (TN) einen Übertragungskanal (ÜK) bereitstellt um zwischen angeschlossenen Teilnehmern (A,B,B*) eine Nachricht zu übertragen und folgende Schritte umfasst: Überwachen der Funktionsfähigkeit eines an einer Vermittlungsstation (VRA) angeschlossenen ersten Teilnehmeranschlusses (ALA); Erzeugen einer Fehlermeldung (FM) für den Falle dass dieser Teilnehmeranschluss (ALA) nicht funktionsfähig ist; und Übermitteln dieser Fehlermeldung (FM) an einen zweiten Teilnehmer (B;B*).

## Beschreibung

### Stand der Technik

Ein Kommunikationssystem dient dem zweckgebundenen Transfer bzw. Austausch von Informationen. Bei einem öffentlichen Telekommunikationsnetz erfolgt die Informationsübermittlung über Anschlussleitungen an Vermittlungsrechner die in einem Netz Übertragungswege bereitstellen. Ein funktionssicherer Teilnehmeranschluss ist die Voraussetzung für die Nutzung der Dienste und Dienstmerkmale des Netzes. Eine zuverlässige Nachrichtenübermittlung kommt nur dann zustande, wenn die Endeinrichtungen, die Anschlussleitungen und das Netz die gestellten Anforderungen erfüllen.

Zur Fehlererkennung, zur Fehlerdiagnose und zur Fehlerlokalisierung sind in Fernsprechnetzen verschiedene Prüfmaßnahmen wie Mitlaufüberwachung, Routine- und Bedarfsprüfungen bekannt. Werden beispielsweise in einem Netz Routineprüfungen wöchentlich durchgeführt, so erfasst man nur etwa 10 % der Störungen. In 90% der Fälle erfährt das Servicepersonal des Netzbetreibers erst aufgrund von Kundenbeschwerden von tatsächlichen oder vermeintlichen Defekten. Zwischen dem Auftreten eines Fehlers und seiner Behebung können dann bis zu 24 Stunden - im Extremfall sogar mehr - vergangen sein. In einem Fernsprechnetz werden aber zunehmend höhere Anforderungen an die Netzverfügbarkeit gestellt.

Bei analogen Anschlüsse kann mittels eines, im nicht hörbaren Bereich übertragenen Dauertons ein Leitungsbruch von einem sogenannten Konzentrator erkannt werden. Das analoge Fernsprechnetz befindet sich aber in einem kontinuierlichen Übergang zum durchgehend digitalen Fernsprechnetz. Um auch bei digitalen Anschlüssen eine Anschlussleitung überprüfen zu können, werden zyklische Meldungen im Nachrichten- oder Steuerkanal übertragen.

Um eine möglichst hohe Netzverfügbarkeit zu erreichen, werden zunehmend Prüffunktionalitäten an die Vermittlungsstellen des Netzes verlagert, welche Teilnehmeranschlüsse vor Ort überwachen.

Durch eine automatische Prüfung, die beispielsweise alle fünf Minuten abläuft, lässt sich die Netzverfügbarkeit erheblich verbessern. Die Funktionalität zur Durchführung der Tests ist im Vermittlungsrechner integriert und den einzelnen Teilnehmer-Leitungsbaugruppen zugeordnet. Durch eine derartige integrierte Teilnehmerleitungsprüfung können sowohl analoge wie auch digitale Anschlüsse effizient überwacht werden. Im Fehlerfall kann ein erweitertes Prüfprogramm gestartet werden. Dadurch kann eine Fehlereingrenzung durchgeführt werden. Das Wartungspersonal des Netzbetreibers erhält durch diese Prüffunktionalität eine detaillierte Information über den Ausfall der netzinternen Baugruppe. In den meisten Fällen ist es möglich, den Fehler sehr rasch zu beheben, oft so schnell, dass der betreffende Teilnehmer gar nichts davon merkt.

Neben der Sprachübermittlung kann durch das Fernsprechnetz aber auch die Übermittlung von Daten zur Überwachung und Beeinflussung räumlich entfernter Teilnehmerendeinrichtungen erfolgen.

Für sicherheitstechnische Einrichtungen, bei denen eine Alarmnachricht über das Telekommunikationsnetz übertragen wird, sind besonders hohe Anforderungen an die Zuverlässigkeit zu stellen. Ein Alarm muss nicht nur sicher sondern auch schnell an eine Zentrale gelangen. Ein praktisches Beispiel ist eine Brandmeldeanlage, bei der ein Feueralarm zuverlässig und schnell an die Feuerwehr oder eine Brandschutzeinheit gemeldet werden muss. Ein weiteres Beispiel ist ein Einbruchalarmsystem, das über die Telefonleitung einen Alarm zu einem Wachdienst sendet. In beiden Fällen kommt es entscheidend darauf an, dass die Nachricht sicher und schnell an den Empfänger übertragen wird. Bei Einbruchalarmsystemen kommt hinzu, dass nicht nur mit technischen Störungen zu rechnen ist, sondern dass der Übertragungsweg auch Angriffen ausgesetzt ist, die darauf abzielen, das Sicherheitssystem lahmzulegen. Entscheidend ist hierbei, dass das Kommunikationssystem im Zeitpunkt des alarmauslösenden Ereignisses mit einer hohen Wahrscheinlichkeit in einem funktionsfähigen Zustand angetroffen wird.

Aus WO 98/09420 ist ein Verfahren zum Überwachen von Anschlüssen eines ISDN-Fernmeldenetzes bekannt, bei der jeder zu überwachende Teilnehmer-Anschluss mit einer Antwortstation ausgerüstet ist, die von einer Prüfstation Meldungen entgegen nimmt bzw. an diese abgeben kann. Auf Veranlassung eines Bedieners baut die Prüfstation eine normale Kommunikationsverbindung über das Vermittlungsnetz zu einer Antwortstation mit dem zu überprüfenden Endgerät auf. Dadurch wird die Antwortstation in einen Überwachungszustand gebracht, in welchem sie alle D-Kanal-Informationen zur Prüfstation spiegelt. Aus diesen Informationen erstellt die Prüfstation ein Prüfprotokoll, das sie an das Wartungspersonal weiter leitet.

In EP 0 939 944 wird zum Überwachen einer entfernten Terminalanlage, wie z.B. einem Sicherheitsalarmsystem, vorgeschlagen, zwischen der Zentralstation und dem zu überwachenden System an einem entfernten Ort einen digitalen Nachrichtenkanal zu verwenden. Die abgefragte Antwort wird verschlüsselt, wodurch eine Authentifizierung der Abfragenachricht an der Zentralstation möglich ist. Auf diese Weise wird neben der Verfügbarkeit auch die Unversehrtheit des Systems geprüft.

Diese bekannten Verfahren haben den Nachteil, dass die Überwachung von außen initiiert wird. D.h., zwischen dem überwachenden und überwachten System wird periodisch eine oft weiträumige Kommunikationsverbindung hergestellt. Die Teilnehmerendeinrichtungen müssen hierfür entsprechend ausgelegt sein. Dies ist technisch aufwendig und die Übertragung der Prüfnachricht für den Initiator kostenpflichtig.

### Darstellung der Erfindung

Aufgabe der Erfindung ist es, die Verfügbarkeit eines Übertragungskanals zwischen einer Alarmerfassungseinheit und einer örtlich entfernt liegenden Alarmerfassungszentrale zu verbessern.

Diese Aufgabe wird durch ein Verfahren mit den technischen Merkmalen des Patentanspruchs 1 und durch eine Einrichtung mit den technischen Merkmalen des Patentanspruchs 9 gelöst.

Das erfindungsgemäße Verfahren zum Betreiben eines Kommunikationssystems, bei dem ein Telekommunikationsnetz einen Übertragungskanal bereitstellt um zwischen angeschlossenen Teilnehmern eine Nachricht zu übertragen, umfasst folgende Schritte:
- Überwachen der Funktionsfähigkeit eines an einer Vermittlungsstation ersten Teilnehmeranschlusses;
- Erzeugen einer Fehlermeldung für den Falle dass dieser Teilnehmeranschluss nicht funktionsfähig ist;
- Übermitteln dieser Fehlermeldung an einen zweiten Teilnehmer.

Der Erfindung liegt der Gedanke zugrunde, an einen Teilnehmer eine Fehlermeldung zu übermitteln, wenn in einem zu überwachenden Übertragungskanal netzseitig eine Störung erkannt wird. Bei Vermittlungseinrichtungen die eine Teilnehmeranschlussprüfung periodisch durchführen liegt die Information über eine aufgetretene Störung bereits vor. Die Übermittlung der Fehlermeldung erfolgt automatisch und ist ereignisgesteuert. Die Information über das Vorliegen eines Fehlers ist das Ergebnis eines Überwachungsvorgangs, der im Netz stattfindet. Der Vermittlungsrechner des Netzes initiiert im Fehlerfall automatisch den Verbindungsaufbau zu dem zu benachrichtigenden Teilnehmer. Durch die netzseitige Fehlererfassung kann auch dann eine Fehlermeldung an eine Alarmempfängerzentrale übermittelt werden, wenn die Verbindung zu einer Alarmsendeeinrichtung unterbrochen oder die Kommunikationsendeinrichtung defekt ist. Eine Restfunktionalität ist in der Alarmsendeeinrichtung nicht erforderlich. Eine zyklische Abfrageprozedur, mit der eine Alarmzentrale die Funktionsfähigkeit der Verbindung zu einer Alarmsendeeinrichtung überprüft, entfällt. In der Alarmempfängerzentrale können so frühzeitig Maßnahmen zur Fehlerbehandlung eingeleitet werden. Der Ausfall eines Übertragungskanals wird frühzeitig erfasst und kann sofort gemeldet werden. Dies eröffnet in der Alarmzentrale die Möglichkeit, auch für den Fall Vorsorge zu treffen, dass eventuell ein Alarm ansteht, dieser aber nicht weiter geleitet werden kann. M. a. W., durch die Erfindung ist es möglich, die Wahrscheinlichkeit, dass das Alarmsystem im Zeitpunkt eines alarmauslösenden Ereignisses in einem funktionsfähigen Zustand angetroffen wird, zu erhöhen.

Bevorzugt erfolgt das Erzeugen der Fehlermeldung in einer einer Teilnehmeranschlussbaugruppe zugeordneten Überwachungseinrichtung einer Vermittlungsstation. Die Erfindung nützt dabei vorteilhaft Einrichtungen, die in Vermittlungsstellen des Netzes zur Überwachung analoger und digitaler Teilnehmeranschlüsse bereits vorhanden sind. Es erfordert nur geringen Aufwand, diese Wählsysteme so zu konfigurieren, dass im Fehlerfall nicht der Operator, d.h. das Wartungspersonal des Netzbetreibers, sondern ein angeschlossener Teilnehmer benachrichtigt wird. Durch die dezentrale Anordnung der Prüfeinrichtungen entfällt eine aufwendige Administration im Netz. Verglichen mit der durch eine Teilnehmerendeinrichtung angestoßenen Überwachungsprozedur gelangt die Information über das Vorliegen eines Fehlers schneller an die Alarmzentrale und verursacht geringere Kosten.

Es ist von Vorteil, wenn diese Überwachungseinrichtung in der Vermittlungsstelle in wählbaren Zyklen ein Prüfprogramm starten, um die Funktionsfähigkeit einer Teilnehmeranschlussleitung zu testen. Durch den kontinuierlichen Prüfvorgang können auftretende Fehler rasch entdeckt und lokalisiert werden. Die Prüfung kann so für verschiedene Leitungen mit unterschiedlicher Gewichtung erfolgen.

Es ist hierbei von besonderem Vorteil, wenn das Prüfprogramm eine periodische Messung der Leitungsparameter durchführt. Dies ermöglicht eine detaillierte Fehlerdiagnose.

Mit Vorteil werden Messergebnisse mit einem einstellbaren Schwellwert verglichen und bei Überschreiten oder Unterschreiten des Schwellwertes die Übermittlung der Fehlermeldung ausgelöst. Der Vergleich mit einem einstellbaren Schwellwert ermöglicht es, bekannte örtlich Besonderheiten des Anschlusses zu berücksichtigen.

Besonders vorteilhaft ist, wenn eine vorgebbare Anzahl von Messergebnissen in einer als History-File ausgebildeten Speichereinrichtung aufgezeichnet wird und diese mit der Fehlermeldung an den zweiten Teilnehmer übermittelt wird. Auf diese Weise ist es möglich, an eine Alarmzentrale auch Informationen über die Qualität einer Anschlussleitung vor dem Auftreten des Fehler zu übermitteln. In der Alarmempfangszentrale kann auf diese Weise eine Plausibilitätskontrolle durchgeführt werden und vorübergehende Störungen, beispielsweise verursacht durch ein Gewitter, einer differenzierten Fehlerbehandlung und Bewertung unterzogen werden.

In einer bevorzugten Ausführungsform, bei der der Übertragungskanal zumindest abschnittsweise als ISDN-Netzwerk ausgebildet ist, erfolgt die Übermittlung der Fehlermeldung im Signalisierungskanal, dem D-Kanal des ISDN-Netzwerkes. Der ISDN-Anschluss kann einfach durch eine Kontrolle der Aktivierbarkeit geprüft werden. Bei dieser Prozedur werden keine Nachrichten ausgetauscht, die Steuersignale werden vielmehr durch bestimmte Zustände der Schnittstellenleitung dargestellt.

Ein erfindungsgemäßes Telekommunikationsnetz, umfasst eine in einer Vermittlungsstelle integrierte Überwachungseinrichtung zur Überwachung von Teilnehmeranschlüssen, die so eingerichtet ist, dass sie das Auftreten einer Fehlfunktion an einem ersten Teilnehmeranschluss an einen zweiten Teilnehmer übermittelt.

Bevorzugt besteht die Überwachungseinrichtung aus einer Messeinrichtung, die Leitungsparameter von Teilnehmeranschlussleitungen misst und einer Meldeeinrichtung, die eine Fehlermeldung an einen zweiten Teilnehmer übermittelt wenn die Größe eines gemessenen Leitungsparameters einen vorgegebenen Schwellwert überschreitet oder unterschreitet.

In bestehenden Vermittlungsrechnern eines Telekommunikationssystems kann bei der Realisierung der Erfindung auf bereits implementierte Funktionalitäten mit Vorteil zurückgegriffen werden, da sowohl Software- als auch Hardwarefunktionen zum Prüfen von Anschlussleitungen bereits vorhanden sind. In einem Vermittlungsrechner kann auf einfache Weise programmtechnisch eine Zuordnung zwischen dem zu überwachenden Anschluss und der Adresse, an welche die Fehlermeldung zu richten ist, in einer Datenbasis eingetragen sein. Es können mehrere Anschlüsse mit unterschiedlicher Priorität überwacht werden. Für Leitungen, die mit einer hohen Priorität vermerkt sind, erfolgt der Aufruf des Prüfprogramms häufiger. Sobald das Prüfprogramm einen Fehler auf einer derart gekennzeichneten Leitung erkennt, wird die zugeordnete Adresse des alarmempfangenden Teilnehmeranschlusses aus der Datenbasis ausgelesen. Der Vermittlungsrechner initiiert eine D-Kanal-Meldung und übermittelt an diese Adresse die Teilnehmerdaten und gegebenenfalls eine Fehlerbeschreibung. Dadurch ist eine schnellere Fehlereingrenzung möglich. Eine Alarmmeldung wird nur bei einem tatsächlich anstehenden Alarm übertragen, bei einem Fehler im Übertragungskanal erfolgt hingegen eine Fehlermeldung. Eine implizite Kontrolle, wie zyklisches Abfragen des Alarmgebers durch einen Teilnehmer entfällt, da ein Versagen einer angeschlossenen Teilnehmerendeinrichtung oder ein Leitungsbruch direkt vom Telekommunikationsnetz erfasst und weitergeleitet wird.

### Kurzbeschreibung der Zeichnungen

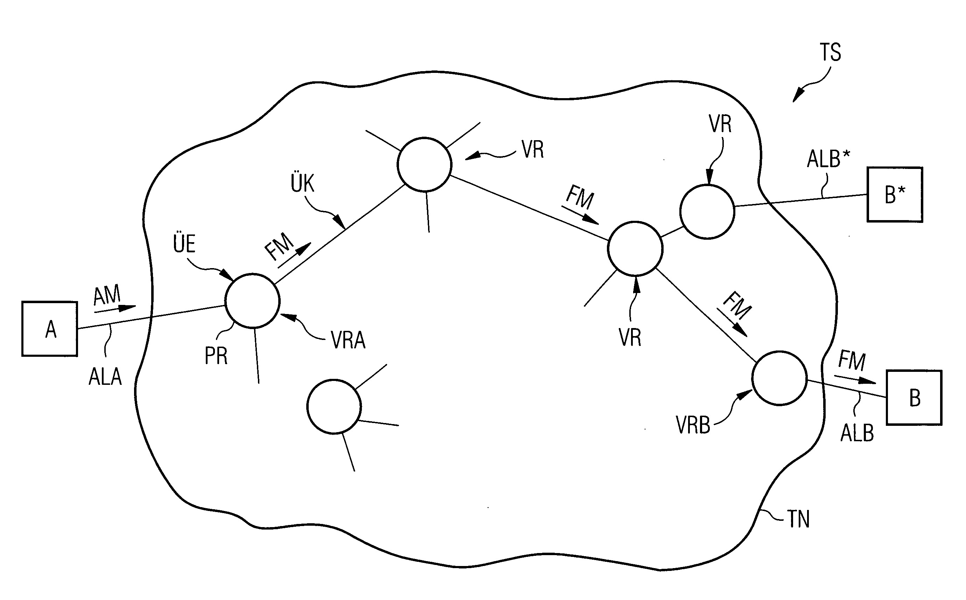

Die Erfindung wird nachstehend anhand einer einzigen Figur näher erläutert. Diese Figur zeigt ein Ausführungsbeispiel in einer stark vereinfachten Blockdarstellung.

### Ausführung der Erfindung

Das in der Figur dargestellte Telekommunikationssystem TS dient zur Übermittlung von Informationen zwischen den an ein Telekommunikationsnetz TN angeschlossenen ersten Teilnehmer A und zweiten Teilenehmer B bzw. B*. Die Erfindung wird nachstehend beispielhaft anhand eines öffentlichen digitalen ISDN-Fernsprechnetzes TN erläutert. Ein Teilnehmer A, beispielsweise ein Alarmgeber einer Brandmeldeanlage, ist über eine Anschlussleitung ALA an eine digitale Vermittlungsstelle VRA des Netzes TN angeschlossen. Die Vermittlungsstelle VRA ist mit weiteren Vermittlungsrechnern VR vernetzt. Die Vermittlungsrechner VR stellen im Netz TN Übertragungskanäle bereit. In der schematischen Darstellung ist ein Übertragungskanal ÜK zwischen dem Teilnehmer A und dem Teilnehmer B bzw. B* gezeigt. Im dargestellten Ausführungsbeispiel ist durch das Bezugszeichen B, bzw. B* jeweils eine Alarmauswertung, beispielsweise die dem Alarmgeber A zugeordneten Alarmzentrale (B, B*) einer Dienststelle einer Feuerwehr gekennzeichnet. Im fehlerfreien Zustand der Leitung ALA kann eine Alarmmeldung AM, die der Alarmgeber A über die Anschlussleitung ALA in das Netz TN sendet, über den dargestellten Übertragungsweg ÜK im Netz TN und über die Teilnehmeranschlussleitung ALB an die Alarmzentrale B übermittelt werden. Diese Alarmmeldung AM kann in einem ISDN-Netz über den B- bzw. D-Kanal erfolgen. Ist aber die Anschlussleitung ALA gestört, so wird diese Störung in der Vermittlungsstelle VRA erkannt und gemäß der Erfindung eine Fehlermeldung FM nach außen übermittelt. Die Initiative für die Übermittlung der Fehlermeldung FM an den Teilnehmer B entsteht also im Netz TN, da der aktuelle Status der Leitung ALA durch die netzseitige Prüfeinrichtung PR erfasst wird. Eine teilnehmerseitig ausgelöste zyklische Überprüfung des Verbindungsweges zwischen den Endeinrichtungen A und B entfällt. Bei einer Funktionsstörung der Leitung ALA kann diese Information praktisch sofort an B weitergeleitet werden. Da auf diese Weise in der Alarmzentrale B stets eine aktuelle Information über den Status der Verbindung zum Alarmgeber A vorliegt, können in der Zentrale B rechtzeitig geeignete Maßnahmen ergriffen werden; dies kann beispielsweise dadurch erfolgen, dass auf eine andere Kommunikationsverbindungen umgeschaltet wird.

Für den Fall, dass der Vermittlungsrechner VRB den Anschluss ALB als fehlerhaft erkennt, kann netzseitig die Alarmmeldung AM bzw. die Fehlermeldung FM über den Teilnehmeranschluss ALB* an die Alarmzentrale B* umgeleitet werden.

In Betrieb befindliche Vermittlungseinrichtungen des Typs "Digitales Elektronisches Wählsystem - EWSD" der Firma Siemens können mit vergleichsweise geringen Kosten so umgerüstet werden, dass der Übertragungskanal, der an das Netz angeschlossene sicherheitstechnische Einrichtungen verbindet, eine hohe Verfügbarkeit aufweist.
Bei diesen Wählsystemen kann die Software mit vergleichsweise geringem Aufwand so geändert werden, dass eine Störung in einer angeschlossenen Teilnehmeranschlussleitung erfasst und an eine dem Alarmgeber zugeordnete Zentrale nach außen gemeldet wird. Die Hardware der Prüfeinrichtung ist im Wählsystem zumindest teilweise bereits vorhanden, da auf bereits integrierte Prüf- und Messfunktionalität zurückgegriffen werden kann. Diese integrierte Prüf- und Messfunktionalität ist beispielsweise in der Firmenbroschüre Siemens "EWSD - Integrated Line Test Functions" beschrieben.

## Patentansprüche

1. Verfahren zum Betreiben eines Kommunikationssystems (TS), bei dem ein Telekommunikationsnetz (TN) einen Übertragungskanal (ÜK) bereitstellt um zwischen angeschlossenen Teilnehmern (A, B, B*) eine Alarmnachricht zu übertragen und folgende Schritte umfasst:
a. Überwachen der Funktionsfähigkeit eines an einer Vermittlungsstation (VRA) ersten Teilnehmeranschlusses (ALA);
b. Erzeugen einer Fehlermeldung (FM) für den Falle dass dieser Teilnehmeranschluss (ALA) nicht funktionsfähig ist;
c. Übermitteln dieser Fehlermeldung (FM) an einen zweiten Teilnehmer (B; B*).

2. Verfahren nach Anspruch 1, **dadurch gekennzeichnet, dass** das Erzeugen der Fehlermeldung (FM) in einer einer Teilnehmeranschlussbaugruppe zugeordneten Überwachungseinrichtung (ÜE)der Vermittlungsstation (VRA) erfolgt.

3. Verfahren nach Anspruch 2, **dadurch gekennzeichnet, dass** die Überwachungseinrichtung (ÜE) in wählbaren Zyklen ein Prüfprogramm (PR) startet um die Funktionsfähigkeit einer Teilnehmeranschlussleitung zu testen.

4. Verfahren nach Anspruch 3, **dadurch gekennzeichnet, dass** das Prüfprogramm (PR) eine periodische Messung von Leitungsparametern durchführt.

5. Verfahren nach Anspruch 4, **dadurch gekennzeichnet, dass** das Prüfprogramm aus jeder Messung ein Messergebnis bereitstellt und dieses mit einem einstellbaren Schwellwert vergleicht und bei Überschreiten oder Unterschreiten eines einstellbaren Schwellwertes die Übermittlung der Fehlermeldung auslöst.

6. Verfahren nach Anspruch 5, **dadurch gekennzeichnet, dass** eine vorgebbare Anzahl von Messergebnissen in einer als History-File ausgebildeten Speichereinrichtung aufgezeichnet und mit der Fehlermeldung an den zweiten Teilnehmer übermittelt wird.

7. Verfahren nach einem der vorstehenden Ansprüche, **dadurch gekennzeichnet, dass** der Übertragungskanal(ÜK) zumindest abschnittsweise als ISDN-Netzwerk ausgebildet ist und die Übermittlung der Fehlermeldung (FM) im D-Kanal des ISDN-Netzwerkes erfolgt.

8. Verfahren nach einem der vorstehenden Ansprüche, **dadurch gekennzeichnet, dass** das Telekommunikationsnetz als dienstintegriertes digitales Telekommunikationsnetz ausgebildet ist und die Überwachung des ersten Teilnehmeranschlusses durch eine Kontrolle der Aktivierbarkeit ausführt.

9. Telekommunikationsnetz, umfassend eine in einer Vermittlungsstelle integrierten Überwachungseinrichtung (ÜE) zur Überwachung von Teilnehmeranschlüssen (ALA, ALB, ALB*), die so eingerichtet ist, dass sie das Auftreten einer Fehlfunktion an einem ersten Teilnehmeranschluss (ALA) an einen zweiten Teilnehmer (B,B*) übermittelt.

10. Telekommunikationsnetz nach Anspruch 9, **gekennzeichnet durch** eine Überwachungseinrichtung (ÜE) mit:
o einer Messeinrichtung, die Leitungsparameter von Teilnehmeranschlussleitungen misst,
o einer Meldeeinrichtung, die eine Fehlermeldung an einen zweiten Teilnehmer übermittelt wenn die Größe eines gemessenen Leitungsparameters einen vorgegebenen Schwellwert überschreitet oder unterschreitet.

11. Telekommunikationsnetz nach Anspruch 10, **dadurch gekennzeichnet, dass** die Meldeeinrichtung automatisch eine Verbindung zum zweiten Teilnehmer (B, B*) herstellt.

12. Telekommunikationssystem nach einem der Ansprüche 9 bis 11, **dadurch gekennzeichnet, dass** die Verbindung zum zweiten Teilnehmer eine ISDN-Verbindung ist und die Fehlermeldung über den ISDN-D-Kanal erfolgt.

13. Kommunikationssystem bei dem ein Telekommunikationsnetz einen Abschnitt eines Übertragungskanals zu einem angeschlossenen Teilnehmer überwacht und im Fehlerfall eine Störungsmeldung an einen anderen Teilnehmer übermittelt.

14. Kommunikationssystem nach Anspruch 13, **dadurch gekennzeichnet, dass** ein Telekommunikationsnetz nach Anspruch 9 einen Übertragungskanal zwischen einer alarmsendenden und einer alarmempfangenden Teilnehmerendeinrichtung herstellt.
